# FASCICULE DE BREVET EUROPEEN

(11) **EP 1 273 166 B1**
(45) Date de publication et mention de la délivrance du brevet: **09.06.2004**
(21) Numéro de dépôt: 01917392.1
(22) Date de dépôt: 11.04.2001
(51) Int. Cl.: H04N 5/445

(54) **METHODE POUR L'AFFICHAGE SELECTIF DE PROGRAMMES TELEVISUELS**
VERFAHREN ZUR SELEKTIVEN ANZEIGE VON FERNSEHPROGRAMMEN
METHOD FOR SELECTIVE DISPLAY OF TELEVISION PROGRAMMES

(30) Priorité: 14.04.2000 CH 740002000
(43) Date de publication de la demande: 08.01.2003
(73) Titulaire: Nagravision SA, 1033 Cheseaux-sur-Lausanne (CH)
(72) Inventeur: GOEKE, Maxime, CH-1033 Cheseaux-sur Lausanne (CH); BERTHOLET, Patrick, CH-1004 Lausanne (CH)
(74) Mandataire: Wenger, Joel-Théophile
(86) Numéro de dépôt international: PCT/IB2001/000605
(87) Numéro de publication internationale: WO 2001/080552

(56) Documents cités:
- WO-A-98/53609
- WO-A-99/34564
- WO-A-99/35846

## Description

La présente invention concerne une méthode pour l'affichage sélectif de programmes télévisuels, en particulier lors de l'affichage de programmes de télévision à péage.

Afin de satisfaire un public aussi large que possible, l'offre de télévision à péage se caractérise par une abondance de propositions.

Lors d'un abonnement à un bouquet de chaînes télévisuelles, le téléspectateur est confronté à une offre pléthorique dont il a de la difficulté à faire le tri d'une manière efficace.

Les volumineux programmes télévisuels ont été remplacés par un affichage convivial directement à l'écran. Ces programmes sont connus sous l'appellation "EPG, Electronic Program Guide", soit guide de programme électronique.

Ils présentent l'avantage de ne pas nécessiter de papier et ils sont toujours à jour.

Les différentes émissions proposées comprennent des indications de catégories afin de faciliter le choix du téléspectateur. On entend par "catégorie" une indication telle que "informations", "sport", "fiction" etc.

De plus, une deuxième catégorie vient s'ajouter à la première pour déterminer la classe d'âge des émissions proposées.

Les systèmes EPG connus disposent d'un filtre permettant de filtrer les programmes affichés et donc accessibles au téléspectateur en fonction de l'indication de la classe d'âge. Après une initialisation par l'opérateur habilité (les parents par exemple), l'accès à certaines catégories est soumis à un mot de passe.

Cette structure, bien qu'offrant un contrôle parental indispensable, n'est pas suffisante pour un affichage synthétique de l'offre télévisuelle.

WO-A-98/53609 décrit un système de traitement d'une grille de programmes télévisuels comprenant en amont l'ensemble des informations de l'offre télévisuelle, en aval les informations propres à un groupe d'utilisateurs ainsi que des paramètres définissant un profil utilisateur, ces paramètres sont divisés en plusieurs jeux de paramètres, chaque jeu correspondant à une couche de filtrage permettant de sélectionner la ou les catégories d'informations souhaitées, la première couche définissant un filtre global restrictif défini par le gestionnaire du système, et les filtres suivants définissant un filtre propre au groupe d'utilisateurs.

WO-A-99/34564 divulgue un système de télécommande à touches programmables et à fonctions de filtrage personnalisées qui sont définissables par les différents utilisateurs.

L'objet de la présente invention est de proposer une méthode pour filtrer les informations qui ont le plus de chances d'intéresser le téléspectateur en cours d'utilisation du système, tout en lui permettant d'accéder aux autres émissions d'une manière souple.

Le but de l'invention est atteint par un système de traitement de la grille de programme, tel que défini dans la revendication 1, comprenant au moins deux couches de filtres, chaque filtre permettant de sélectionner la ou les catégories d'émissions souhaitées, la première couche définissant un filtre global et les couches suivantes définissant un filtre individuel.

La couche principale fait fonction de filtre communautaire. Toutes les personnes utilisant le système télévisuel verront l'offre filtrée par ce premier filtre. L'accès aux paramètres de cette couche est soumis à un premier mot de passe. A cela s'ajoute un filtre individuel auquel chaque utilisateur peut paramétrer les émissions qu'il souhaite se voir proposer.

Une des particularités de la méthode selon l'invention est la définition de raccourcis c'est-à-dire des fonctions qui peuvent soit enclencher ou déclencher un filtre.

Prenons par exemple un utilisateur qui s'intéresse principalement aux émissions sportives. Afin d'accéder rapidement à ses émissions préférées dans le foisonnement des offres d'un bouquet télévisuel, cet utilisateur va sélectionner son filtre afin de ne visualiser que les émissions sportives. Il est un peu réducteur de voir l'utilisateur passionné de sport se désintéressant complètement des autres émissions. C'est pourquoi, la fonction de raccourci permet par exemple de désactiver momentanément l'unique sélection des émissions sportives pour afficher d'autres catégories, par exemple les informations.

A ce propos, la fonction de raccourci peut, à choix :
- supprimer ou activer le filtre utilisateur, permettant ainsi la visualisation de toutes les émissions autorisées par le filtre communautaire ou inversement de ne visualiser que les émissions autorisées par le filtre.
- ajouter ou supprimer une ou des catégories, permettant ainsi soit de visualiser d'une manière plus large que précédemment ou au contraire d'effectuer une fonction zoom, c'est-à-dire par une seule fonction, sélectionner une seule catégorie, les émissions animalières par exemple.
- définir une ou plusieurs catégories de filtre,

Ces fonctions de raccourcis procurent une grande souplesse d'utilisation pour retrouver ses émissions préférées dans l'offre importante de plusieurs chaînes télévisuelles.

Selon une forme de l'invention, seule la première identification de l'utilisateur est soumise à un mot de passe, les opérations de raccourcis sont quant à elles, exécutées sans mot de passe.

L'accès à ces fonctions peut se faire idéalement par des touches dédicacées à cet effet sur la télécommande. Selon un premier mode de réalisation, une seule touche commande la fonction de raccourci en liaison avec une des touches 0 à 9 pour sélectionner la fonction de raccourci 1 à 10.

Selon une autre forme de l'invention, la télécommande comprend quelques touches propres à cet effet et un seul appui est suffisant pour appeler la fonction raccourci.

L'invention sera mieux comprise grâce à la description détaillée qui va suivre et qui se réfère aux dessins annexés qui sont donnés à titre d'exemple nullement limitatif, dans lesquels :
- La figure 1 représente la structure de l'organisation des filtres;
- La figure 2 représente une variante de la structure de l'organisation des filtres.

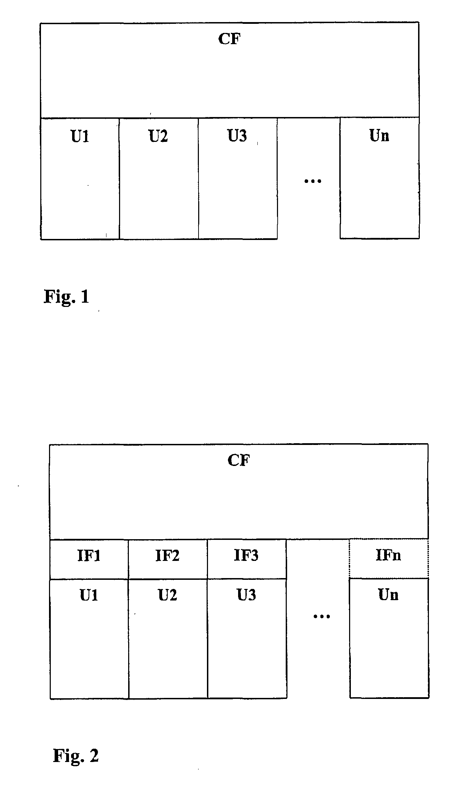

Sur la figure 1, la couche communautaire est appelée CF. Cette couche est accessible au gestionnaire du système grâce à un mot de passe spécifique. Dans cette couche il est possible de définir les catégories intervenant pour tous les utilisateurs. Le cadre de chaque utilisateur est également défini à ce niveau, par exemple pour allouer un crédit pour l'achat d'émissions.

A cette couche communautaire CF, vient s'ajouter une couche utilisateur Un, propre à un individu, voire un groupe tel que les enfants. Dans cette couche, il est défini premièrement un mot de passe permettant l'accès à l'édition de cette couche et un mot de passe qui peut être différent pour l'utilisation des fonctionnalités de cette couche.

Ainsi, il sera possible de définir les fonctions des raccourcis qui seront exécutées sur simple appui de la touche adéquate.

Prenons par exemple l'utilisateur A dont les paramètres sont définis dans le bloc U1. Cet utilisateur possède un premier mot de passe lorsqu'il enclenche le décodeur et qui permet de l'identifier. A ce moment, le système reconnaît A et lui applique les paramètres de la couche U1. Dans cette couche, il a été défini de ne visualiser que les dessins animés. A, va donc pouvoir choisir dans l'offre télévisuelle uniquement parmi les dessins animés.

Dans les paramètres de la couche U1, la touche de raccourci a été définie comme : ajouter la catégorie "reportage animalier".

Ainsi, dès que l'utilisateur A va déclencher la touche R1, il pourra visualiser les dessins animés et les reportages animaliers.

Dans cet exemple, la touche de raccourci R2 est définie pour visualiser uniquement la catégorie des sports. De ce fait, l'activation de la touche R2 provoque l'annulation de la visualisation précédente et la visualisation des émissions relatives au sport.

Il peut être important d'interdire la modification de la couche utilisateur à son utilisateur. Par exemple, la couche communautaire autorise la catégorie "adulte" alors que la couche U1 l'interdit. Si l'utilisateur peut de lui même modifier les paramètres de sa couche, il pourra rétablir l'accès aux émissions adultes puisqu'elles sont autorisées par la couche communautaire. C'est pourquoi, selon une première forme de l'invention, un mot de passe spécifique, différent de celui de reconnaissance de l'utilisateur, est nécessaire pour modifier les paramètres de la couche utilisateur.

Selon une variante de l'invention, il est ajouté une couche intermédiaire IF tel qu'illustré à la figure 2, entre la couche communautaire et la couche utilisateur. Cette couche est uniquement accessible au gestionnaire du système, en charge de la couche communautaire et contient les catégories accessibles à l'utilisateur.

On pourra de ce fait donner tout loisir à l'utilisateur pour accéder à sa couche et définir ses touches de raccourcis, sachant qu'il ne pourra quitter le cadre définit premièrement par la couche communautaire et la couche intermédiaire.

Selon une forme de l'invention, l'accès à l'utilisateur par défaut, usuellement l'utilisateur U1, est libre de mot de passe. Ceci est particulièrement utile pour faciliter l'utilisation du système par des enfants. Il faudra prendre garde que les paramètres définis pour cet utilisateur correspondent à l'utilisateur le plus sensible.

Selon une variante de cette fonction, le système est capable de déterminer lequel des utilisateurs dispose de la limitation maximale et l'applique par défaut à cet utilisateur lors de l'enclenchement du système.

## Revendications

1. Système de traitement d'une grille de programmes télévisuels comprenant en amont l'ensemble les informations de l'offre télévisuelle, en aval les informations propre à un groupe d'utilisateurs ainsi que des paramètres définissant un profil utilisateur, ces paramètres sont divisés en plusieurs jeux de paramètres, chaque jeu correspondant à une couche de filtrage permettant de sélectionner la ou les catégories d'informations souhaitées, **caractérisé en ce que** la première couche définissant un filtre global (CF) *restrictif est définie par le gestionnaire du système* et les couches suivantes définissant un filtre propre au groupe d'utilisateurs *contenant des commandes raccourcies de filtrage et définies par au moins un membre du groupe d'utilisateur.*

2. Système selon la revendication 1, **caractérisé en ce que** *les couches suivantes* comprennent des paramètres associés à une ou des fonctions d'activation ou désactivation de filtrage de catégories d'informations.

3. Système selon la revendication 2, **caractérisé en ce que** ces fonctions comprennent l'adjonction, la suppression ou la définition d'une ou des catégories d'informations.

4. Système selon la revendication 3, **caractérisé en ce que** les fonctions sont actionnées par des touches spécifiques sur une commande à distance.

5. Système selon les revendications 1 à 4, **caractérisé en ce que** les couches suivantes comprennent une couche intermédiaire (IF1..IFn) et une couche utilisateur (U1..Un).

6. Système selon la revendication 5, **caractérisé en ce que** la couche intermédiaire et la couche globale sont protégées par un même mot de passe.

7. Système selon l'une des revendications précédentes, **caractérisé en ce que** lors de la mise en route, le système sélectionne le groupe d'utilisateurs disposant du filtrage le plus restrictif.

## Patentansprüche

1. System der Bearbeitung eines Rasters von Fernsehprogrammen, das eingangs die Gesamtheit der Daten zum Fernsehangebot und Ausgangs die einer Gruppe von Benutzern eigenen Daten sowie Parameter umfasst, die ein Benutzerprofil definieren, wobei diese Parameter in mehrere Sätze von Parametern unterteilt sind, deren jeder einer Filterschicht entspricht, die es gestattet, die gewünschte(n) Datenkategorie(n) auszuwählen, **dadurch gekennzeichnet, dass** die erste Schicht, die ein restriktives Pauschalfilter (CF) definiert, durch den Systemverwalter definiert wird, während die darauf folgenden Schichten, die ein Filter definieren, das einer Gruppe von Benutzern eigen ist, Filter-Kurzbefehle enthalten und durch zumindest ein Mitglied der Benutzergruppe definiert werden.

2. System gemäss Anspruch 1, **dadurch gekennzeichnet, dass** die Folgeschichten Parameter enthalten, die mit einer oder mehreren Funktionen der Aktivierung oder Deaktivierung der Datenkategoriefilter verbunden sind.

3. System gemäss Anspruch 2, **dadurch gekennzeichnet, dass** diese Funktionen das Hinzufügen, die Unterdrückung oder die Definition einer oder mehrerer Datenkategorien umfassen.

4. System gemäss Anspruch 3, **dadurch gekennzeichnet, dass** die Funktionen durch spezifische Tastem auf einer Fernbedienung betätigt werden.

5. System gemäss den Ansprüchen 1 bis 4, **dadurch gekennzeichnet, dass** die Folgeschichten eine Zwischenschicht (IF1...IFn) und eine Benutzerschicht (U1...Un) umfassen.

6. System gemäss Anspruch 5, **dadurch gekennzeichnet, dass** die Zwischenschicht und die Pauschalschicht durch ein und dasselbe Kennwort geschützt sind.

7. System gemäss einem der vorangehenden Ansprüche, **dadurch gekennzeichnet, dass** bei seiner Inbetriebnahme das System die Benutzergruppe auswählt, die der restriktivsten Filterung unterliegt.

## Claims

1. A processing system of a television program grid comprising on one side the information of the television channels information, and on the other part the channels information particular to a group of users as well as parameters defining a user profile, these parameters are divided into several sets of parameters, each set corresponding to a filter layer allowing to select the category or categories of desired information, **characterized in that**, the first layer defining a global restrictive filter (CF) is defined by the manager of the system and the following layers defining a filter particular to a group of users contain filtering short commands and defined by at least one member of the group of users.

2. A system according to Claim 1, **characterized in that** the following layers comprises parameters associated to one or several of the activation or disconnection functions of filtering of information categories.

3. A system according to Claim 2, **characterized in that** these functions comprise the adding, the suppression or the definition of one or several information categories.

4. A system according to Claim 3, **characterized in that** these functions are activated by specific keys on a remote control.

5. A system according to Claims 1 to 4, **characterized in that** the following layers comprise an intermediate layer (IF1..IFn) and a user layer (U1..Un).

6. A system according to Claim 5, **characterized in that** the intermediate layer and the global layer are protected by a same password.

7. A system according to any of the previous Claims, **characterized in that** when starting the system it selects the user group having the most restrictive filtering.
